# EUROPÄISCHE PATENTANMELDUNG

(11) **EP 1 232 964 A2**
(43) Veröffentlichungstag der Anmeldung: **21.08.2002**
(21) Anmeldenummer: 01127585.6
(22) Anmeldetag: 19.11.2001
(51) Int. Cl.: B65G 13/08, B65H 29/66, B65G 13/06

(54) **Kurvenförderer**

(30) Priorität: 24.01.2001 DE 10103116
(71) Anmelder: Gämmerler AG, 82538 Geretsried-Gelting (DE)
(72) Erfinder: Gämmerler, Günter, 82538 Gelting (DE); Dichtl, Jürgen, 82515 Wolfratshausen (DE); Högn, Klaus, 83022 Rosenheim (DE); Meisel, Roland, 82431 Kochel am See (DE)
(74) Vertreter: Manitz, Finsterwald & Partner

(57) **Zusammenfassung**

Ein Kurvenförderer weist benachbart auf einem Kreisbogen, auf einen gemeinsamen Mittelpunkt weisend angeordnete Walzen (4) auf, von denen mindestens eine angetrieben ist. Der Radius der Walzen am kurveninneren Ende der Walzen ist kleiner als am kurvenäußeren Ende.

## Beschreibung

Die vorliegende Erfindung betrifft Kurvenförderer, insbesondere für in einem Schuppenstrom angeordnete Druckprodukte.

Kurvenförderer sind grundsätzlich bekannt und dienen dazu, einzelne Produkte oder einen Strom von Produkten, insbesondere einen Schuppenstrom von Druckprodukten, aus einer gegebenen Richtung in eine andere Richtung umzulenken.

Treten hierbei Störungen auf, zum Beispiel durch eine schlechte Führung der Produkte, muß die gesamte Anlage angehalten werden, was erhebliche Kosten verursacht. Insbesondere bei der Verwendung von Kurvenförderern in Verbindung mit Druckanlagen, die mit großen Druckgeschwindigkeiten arbeiten, ist das Risiko einer Störung beachtlich. Darüber hinaus sind dann auch die Schäden besonders hoch, da bis zum Anhalten der gesamten Anlage durch Stauungen erheblicher Ausschuß entsteht.

Es ist Aufgabe der Erfindung, einen Kurvenförderer der obengenannten Art bereitzustellen, der eine störungsarme Förderung bei hohen Fördergeschwindigkeiten erlaubt.

Die Aufgabe wird durch einen Kurvenförderer mit den Merkmalen des Anspruchs 1 gelöst.

Ein erfindungsgemäßer Kurvenförderer der oben genannten Art weist benachbart auf einem Kreisbogen, auf einen gemeinsamen Mittelpunkt weisend angeordnete Walzen auf, von denen mindestens eine angetrieben ist. Die Walzen sind dabei so geformt, daß der Radius der Walzen an dem Ende der Walzen, das zum dem Mittelpunkt weist, kleiner ist als am kurvenäußeren Ende, wobei das einhüllende Längsprofil der Walzenoberfläche konkav gewölbt ist. Unter dem Längsprofil der Walzenoberfläche wird hierbei die Einhüllende verstanden, die sich bei einem Längsschnitt entlang der Rotationsachse der Walze aus der Mantelfläche der Walze ergibt. Die Mantelfläche ist hierbei im wesentlichen die Fläche auf der das Produkt beim Fördern aufliegt. Selbstverständlich kann der Walzenkörper aber an den Enden auch noch Fortsätze, zum Beispiel zur Aufnahme von Lagern oder Ringnuten, aufweisen, die für die Auflage und Führung des Produkts keine Rolle spielen. Weist die Walzenoberfläche Unregelmäßigkeiten, Kanten oder Einschnitte auf, denen das Produkt mangels Flexibilität nicht folgen kann und die für die Führung daher keine Rolle spielen, wird als Kurve die Einhüllende der durch die Auflagefläche definierten Kurve unter glatter Fortsetzung über die nicht als Auflagefläche geeigneten Bereiche hinweg verstanden. Insbesondere wenn Walzen eingesetzt werden, die aus mehreren durch Ringspalte getrennten Walzensegmenten zusammengesetzt sind, ist als Längsprofil nur die Einhüllende der Walzensegmente einschließlich ihrer glatten Verbindung über die Spalte hinweg anzusehen.

Durch diese Ausbildung der Walzen ergibt sich eine Vertiefung in der Mitte des einhüllenden Längsprofils der Walze, in die das Produkt einsinken kann und daher besser entgegen der Fliehkraft geführt wird. Darüber hinaus ist die Umfangsgeschwindigkeit der Rolle in der Mitte geringer, wodurch sich überraschenderweise ein Stabilisierungseffekt ergibt.

Der erfindungsgemäße Kurvenförderer ist weiterhin durch Wahl zum Beispiel der Walzenzahl und oder des Winkelabstands zwischen benachbarten Walzen für beliebige Förderwinkel einsetzbar. Unter Förderwinkel wird hierbei der Winkel zwischen der Förderrichtung des Produkts am Eingang bzw. Anfang des Kurvenförderers und der am Ausgang bzw. Ende des Kurvenförderers verstanden.

Der Abstand und die Größe der Walzen richten sich unter anderem nach der Art der zu fördernden Produkte und der typischen Fördergeschwindigkeit.

Zumindest die angetriebenen Walzen weisen an ihrer Oberfläche vorzugsweise ein abriebarmes Material auf, dessen Reibungskoeffizient gegenüber dem zu fördernden Material jedoch hoch genug ist, um das Produkt durch Reibschluß zu bewegen. Dabei kann der gesamte Walzenkörper aus einem solchen Material gefertigt sein oder nur eine äußere Schicht.

Bevorzugte Weiterbildungen der Erfindung sind in den Unteransprüchen, der Beschreibung und der Zeichnung beschrieben.

In einer bevorzugten Ausführungsform sind die Walzen von der kurveninneren Seite aus nach unten geneigt, das heißt, daß der Mittelpunkt, auf den die Walzenachsen weisen, oberhalb der Ebene des Kreisbogens liegt. Eine Schräglage des Produkts in der Kurve, die durch den größeren Durchmesser der Walze an dem kurvenäußeren Ende entsteht und zu einem unruhigen Ein- und Auslauf in beziehungsweise aus dem Kurvenförderer führt, wird hierdurch reduziert. Besonders bevorzugt ist die Neigung derart, daß die Walzenoberseiten an beiden Enden einer Walze gegenüber der Ebene des Kreisbogens gleiche Höhe haben, so daß das Produkt - mit Ausnahme der Wölbung - im wesentlichen horizontal aufliegend durch die Kurve gefördert wird.

In einer weiteren bevorzugten Ausführungsform weist mindestens eine der Walzen mindestens zwei durch einen Spalt getrennte Walzensegmente auf, wobei die Walzensegmente zum Beispiel auf einer gemeinsamen Achse angeordnet sein können. Die Walzensegmente sind dabei so ausgebildet, daß sich für die Walze insgesamt das erfindungsgemäße konkave einhüllende Längsprofil ergibt. Diese Ausführungsform hat den Vorteil, daß zur Herstellung des Walzenkörpers weniger Material verbraucht wird. Darüber hinaus ist die Reibung zwischen Produkt und Walzenoberfläche durch die reduzierte Auflagefläche geringer.

In einer weiteren bevorzugten Ausführungsform weist der Kurvenförderer keine Andruckrollen auf, die das Produkt oder den Schuppenstrom während des Förderns von oben fixieren. Dieses führt zu einem besonders schonenden Transport und zu einer einfachen Bauweise.

In einer weiteren bevorzugten Ausführungsform weist der erfindungsgemäße Kurvenförderer im Bereich der Walzen kein Förderband auf, auf dem das Produkt aufliegt. Insbesondere ist kein Förderband auf den Walzen vorgesehen. Hierdurch vereinfacht sich die Konstruktion des Förderers erheblich.

In einer weiteren bevorzugten Ausführungsform sind alle Walzen angetrieben, was den Vorteil einer gleichmäßigen Geschwindigkeit und damit Förderung des Produkts mit sich bringt.

Bevorzugt ist mindestens eine der angetriebenen Walzen mittels eines Riemenantriebs angetrieben. Dies hat den Vorteil, daß der Antrieb mit einfachen Mitteln erfolgen kann, obwohl die anzutreibenden Walzen um einen Winkel gegeneinander abgewinkelt sind. Besonders bevorzugt werden Rundriemen verwendet, die bei leicht gegeneinander abgewinkelten Walzen in Rillen, zum Beispiel im Walzenkörper ohne große Reibung oder ein Verkanten laufen. Besonders bevorzugt ist hierbei insbesondere, wenn der Walzenkörper Fortsätze mit Rillen aufweist, in denen die Riemen laufen.

In einer weiteren bevorzugten Ausführungsform weist der erfindungsgemäße Kurvenförderer zwei Gruppen benachbarter Walzen auf, wobei die Walzen jeder Gruppe gemeinsam angetrieben sind. Dazu ist in der in Förderrichtung ersten Gruppe eine in Förderrichtung erste Walze und von der anderen Gruppe eine in Förderrichtung letzte Walze von einer Antriebseinrichtung angetrieben. Jeweils ausgehend von diesen Walzen ist dann eine nachfolgende Walze von einer benachbarten Walze derselben Gruppe durch Riemenantrieb angetrieben. Grundsätzlich hat dieser Antrieb den Vorteil, daß nur zwei Antriebseinrichtungen auch bei vielen Walzen vorgesehen werden müssen, was die Konstruktion vereinfacht und erheblich verbilligt. Weiterhin ergeben zum einen sich durch den Antrieb über zwei primär angetriebene Walzen geringere Schlupfverluste bei der Übertragung vom Motor zu einer nicht direkt von ihm angetriebenen Walze. Zum anderen führen die verbleibenden Schlupfverluste des Riemenantriebs dazu, daß die Geschwindigkeit der Walzen in jeder Gruppe mit dem Abstand von der angetriebene Rolle etwas abnimmt. Das heißt, daß die Geschwindigkeit der Walzen der ersten Gruppe zur Kurvenmitte hin etwas abnimmt, um danach bei den Walzen der zweiten Gruppe wieder zuzunehmen. In dem kritischen Bereich der Kurvenmitte ergibt sich daher eine etwas geringere Geschwindigkeit und somit eine geringere Störanfälligkeit. Besonders bevorzugt ist daher die Anzahl der Walzen in beiden Gruppen etwa gleich groß, damit bei Übergang von einer Gruppe zur anderen der Geschwindigkeitsunterschied der Walzen möglichst gering und damit der Transport möglichst ruhig ist. Am Ausgang wird das Produkt dagegen mit etwas erhöhter Geschwindigkeit aus dem Kurvenförderer transportiert, so daß sich beim Übergang auf die gerade Strecke ein Stabilisierungseffekt ergibt. Darüberhinaus sind durch den Antrieb an den Kurvenenden die Produktgeschwindigkeiten dort sehr gut steuerbar.

Bevorzugt sind bei diesem Antriebskonzept die Drehgeschwindigkeiten der Antriebseinrichtungen der beiden durch sie angetriebenen Walzen synchronisiert, so daß sich die Geschwindigkeit des Produkts, insbesondere von in einem Schuppenstrom angeordneten Produkten, in dem Kurvenförderer möglichst wenig verändert. Die Synchronisation kann zum Beispiel mechanisch über geeignete, wenigstens teilweise formschlüssige Getriebe erfolgen, die Antriebe können aber auch elektrisch gesteuert beziehungsweise auf gleiche Drehzahlen geregelt werden. Weiterhin ist der Antrieb durch nur einen Motor mit einem nachgeordneten Verteilergetriebe zu den beiden primär angetriebenen Walzen denkbar.

In einer weiteren bevorzugten Ausführungsform sind bei einem erfindungsgemäßen Kurvenförderer die Walzen auf Achsen gelagert. Zur Halterung der Achsen sind zwei im wesentlichen kreisbogenförmige Wände vorgesehen, zwischen denen die Walzen angeordnet sind. Eine der Wände weist Bohrungen zur Aufnahme der Achsen und die andere eine nach oben weisende, vorzugsweise durch eine Abdeckung abgedeckte Zahnung auf, die so ausgebildet ist, daß in sie die Enden der Walzenachsen einlegbar sind. Diese Art der Halterung erlaubt den besonders einfachen Austausch von Walzen mit zugehörigen Achsen, da eine Achse nur an dem in einer Ausnehmung der Zahnung gehaltenen Ende angehoben und aus der Bohrung in der gegenüberliegenden Wand gezogen werden muß. Der Einbau erfolgt dann umgekehrt. Durch eine auf die Zahnung aufsetzbare Abdeckung kann dabei ein Herausspringen der Walzen beziehungsweise ihrer Achsen vermieden werden.

Bei einer bevorzugten Weiterbildung sind die Achsen und die Bohrungen oder die Zahnung so ausgebildet, daß die Achsen verdrehsicher gehalten sind. Hiermit wird eine Drehung der Achsen in der Halterung und damit eine Abnutzung durch Reibung vermieden. Darüber hinaus ergibt sich auch ein besser definierter Drehwiderstand der Walze, der bei fester Achse nur noch durch das Lager der Walze gegeben ist. Besonders einfach und daher bevorzugt ist der Querschnitt der Achse an dem Ende, das in die Zahnung eingelegt wird, rechteckig oder quadratisch ausgebildet. Die Zahnung kann entsprechend breit ausgebildete Schlitze zur Aufnahme der Achsenenden aufweisen, die an ihrem Ende bogenförmig oder vorzugsweise rechteckig ausgebildet sein können.

In einer weiteren bevorzugten Ausführungsform ist bei einem erfindungsgemäßen Kurvenförderer vor und/oder nach der von den Walzen gebildeten Förderstrecke eine lineare Förderstrecke angeordnet. Bei den linearen Förderstrecken kann es sich um einfache, gerade, nicht angetriebene Förderstrecken, zum Beispiel Tische oder Walzenstrecken, oder auch um Förderstrecken mit angetriebenen Fördermitteln wie zum Beispiel angetriebene Walzen oder Bänder handeln. Eine lineare Förderstrecke wirkt als Beruhigungsstrecke, auf der der Lauf des Schuppenstroms beruhigt wird. Besonders bevorzugt sind sowohl am Eingang wie auch am Ausgang des Kurvenförderers lineare Förderstrecken angeordnet.

Als besonders bevorzugt hat sich herausgestellt, daß der Winkel zwischen der in Förderrichtung ersten und letzten Walze kleiner ist als der Förderwinkel des Kurvenförderers. Dies bedeutet, daß die Drehachse mindestens einer der beiden äußersten Walzen des Kurvenförderers nicht senkrecht zur Richtung der benachbarten linearen Förderstrecke angeordnet ist, sondern mit dieser Richtung einen auf der kurvenäußeren Seite stumpfen Winkel bilden. Hierdurch wird ein besonders ruhiger und störungsarmer Lauf gewährleistet.

Besonders bevorzugt sind zwei lineare Förderstrecken vorgesehen, die mit den Drehachsen der äußersten Walzen jeweils einen gleichen, auf der Kurvenaußenseite stumpfen Winkel einschließen, da dann die genannten Vorteile besonders ausgeprägt sind.

Weiterhin weist eine lineare Förderstrecke bevorzugt mindestens ein angetriebenes Band auf. Vorteilhaft wegen noch besserer Führung werden mehrere parallele Bänder vorgesehen. Durch diesen Antrieb ergibt sich eine reibungsarme Führung. Insbesondere kann auf der linearen Förderstrecke das Produkt, insbesondere ein Schuppenstrom, sehr genau auf eine günstige Geschwindigkeit bei Auflaufen auf die erste Walze der Walzenstrecke gebracht werden. Bei Antrieb der linearen Förderstrecke am Ende des Kurvenförderers wird das Produkt beim Herausführen aus der Kurvenstrecke stabilisiert.

Weiterhin bevorzugt ist es bei einem Kurvenförderer mit zwei linearen, angetriebenen Förderstrecken, daß die Antriebe der beiden linearen Förderstrecken gekoppelt sind. Hierdurch ergibt sich eine gute Synchronisation der Zufuhr- und Abfuhrgeschwindigkeiten in bzw. aus dem Kurvenförderer, was einen gleichmäßigen Produktstrom ermöglicht. Alternativ könnten die Antriebe auch elektronisch auf eine gleiche Geschwindigkeit geregelt werden. Es ist aber auch die Verwendung nur eines Motors mit einem Verteilgetriebe denkbar.

Besonders bevorzugt ist bei einem Kurvenförderer mit zwei linearen Förderstrecken mit angetriebenen Bändern vorgesehen, daß die Förderstrekken jeweils Antriebswellen zum Antrieb mindestens eines der Bänder der jeweiligen Förderstrecke aufweisen und die Antriebswelle der einen Förderstrecke von einem Motor angetrieben ist, während die Antriebswelle der anderen Förderstrecke von der Antriebswelle der einen Förderstrecke über eine erste Kardanwelle, einen von der ersten Kardanwelle angetriebenen Zahnriemenantrieb und eine von dem Zahnriemenantrieb angetriebenen zweite Kardanwelle angetrieben ist. Vorzugsweise sind die Enden der Kardangelenkwellen, die mit dem Zahnriemenantrieb verbunden sind, in einer einzigen Ebene angeordnet, die geneigt zu der durch die förderstreckenseitigen Enden der Kardangelenkwellen definierten Ebene verläuft, um einen möglichst runden Lauf zu gewährleisten. Gegenüber Antrieben mit mehreren Motoren ergibt sich der Vorteil, daß nur ein Motor notwendig ist und eine sehr einfach Synchronisation der Antriebe erreicht wird. Gegenüber einem Antrieb mit einem Motor und einem Verteilgetriebe erweist sich der Zahnriemenantrieb als wesentlich einfacher und billiger.

In einer weiteren bevorzugten Ausführungsform eines Kurvenförderers, der an beiden Enden lineare Förderstrecken sowie die oben genannten zwei Gruppen angetriebener Walzen aufweist, sind zur Sicherstellung eines möglichst gleichmäßigen Geschwindigkeitsverlaufs beim Übergang zwischen linearen Förderstrecken und Walzenstrecke, die Walzen an den Enden der Walzenstrecke über ein Element der linearen Förderstrecke angetrieben. Diese Art der Geschwindigkeitsanpassung ist gegenüber anderen Synchronisationsmöglichkeiten, beispielsweise einer mechanischen Kopplung der Antriebe oder einer elektronischen Steuerung der Antriebe, sehr einfach, aber effektiv.

Schließlich kann erfindungsgemäß eine Abdeckplatte mit einer oder mehreren Öffnungen für die Walzen vorgesehen sein, so daß die Abdeckplatte gleichzeitig als Förderfläche dienen kann.

Eine bevorzugte Ausführungsform der Erfindung wird nun beispielhaft anhand der Zeichnung beschrieben. Es zeigen:
Fig. 1 eine Draufsicht auf einen Kurvenförderer nach einer bevorzugten Ausführungsform der Erfindung,
Fig. 2 einen Längsschnitt durch einen Walzenkörper des Kurvenförderers in Fig. 1, und
Fig. 3 eine teilweise Schnittansicht durch den Kurvenförderers in Fig. 1 entlang der Linie A-A.

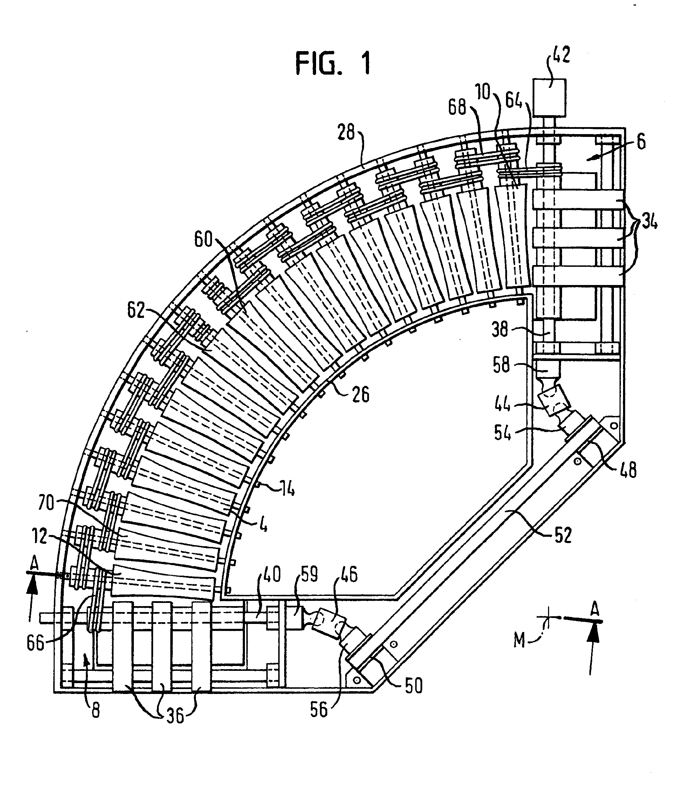

Der in Fig. 1 gezeigte Kurvenförderer weist entlang eines Kreisbogens, auf einen Mittelpunkt M weisende, zueinander benachbart angeordnete Walzen 4 sowie eine erste lineare Förderstrecke 6 am Eingang des Kurvenförderers und eine zweite lineare Förderstrecke 8 am Ausgang des Kurvenförderers auf.

Die linearen Förderstrecken 6 und 8 sind um einen Winkel von 90° gegeneinander gedreht, so daß der Kurvenförderer einen Förderwinkel von 90° hat. Die äußersten Walzen 10 und 12 der durch die Walzen 4 gebildeten Walzenstrecke, bzw. deren Drehachsen, bilden einen Winkel von etwa 80°, der geringer ist als 90°.

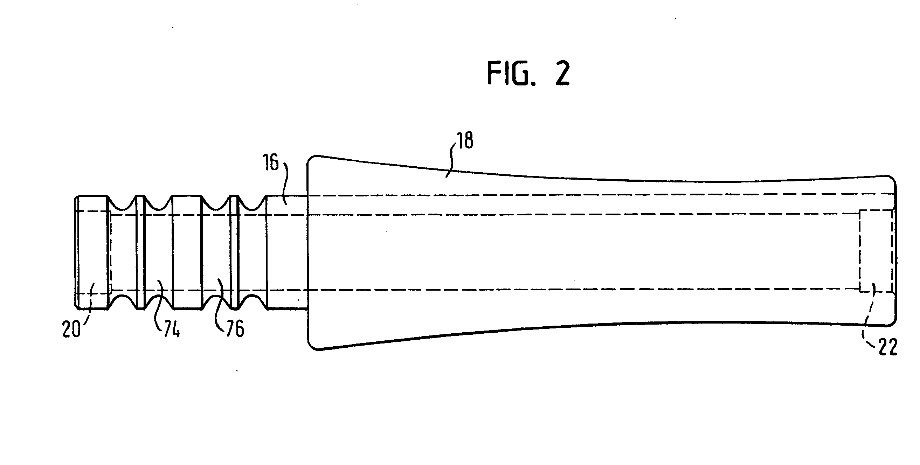

Die Walzen 4 sind auf Achsen 14 drehbar gelagert. Ein Längsschnitt durch eine Walze ist in Fig. 2 gezeigt. Eine Walze weist einen Walzengrundkörper 16, einen die Oberfläche bildenden Mantel 18, der aus Vulkolan ® gefertigt ist, sowie nur gestrichelt gezeichnete Lager 20 und 22 auf, die die Achse 14 aufnehmen. Ausgehend von einem Kegelstumpf ist die Mantelfläche der Walze, auf der Produkt aufliegen kann, konkav gewölbt, wobei der Radius der Walze an ihren beiden Enden verschieden groß ist. Das in Fig. 2 gezeigte einhüllende Kurvenprofil ermöglicht daher ein Einsinken des Produkts in der Mitte der Walze. Wie in Fig. 1 gezeigt, ist dabei die Walze in dem Kurvenförderer mit der Seite mit dem kleineren Endradius auf der Kurveninnenseite angeordnet.

Der Radius der Mantelfläche der Walze an dem kurveninneren Ende ist kleiner als der am kurvenäußeren Ende. Dadurch ist die Umfangsgeschwindigkeit eines Punkts auf der Mantelfläche am kurveninneren Ende kleiner als die eines Punktes am kurvenäußeren Ende. Die Radien sind so gewählt, daß die Umfangsgeschwindigkeiten an diesen Stellen gerade gleich den Geschwindigkeiten des Produkts an der Kurvenaußenseite bzw. Kurveninnenseite entspricht, so daß das Produkt ohne Schlupf an den Enden der Walzen stabil gefördert werden kann. Weiterhin ist dadurch, wie in Fig. 1 gezeigt, eine besonders enge Anordnung der Walzen mit nur einem geringen Zwischenraum möglich.

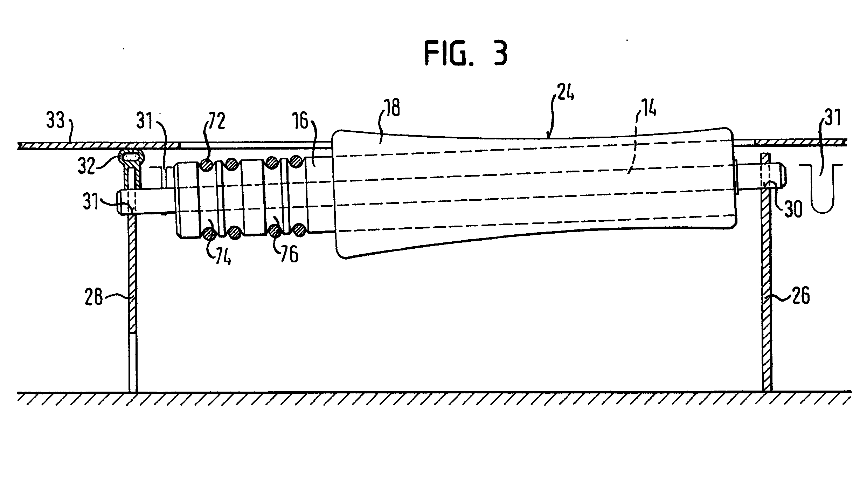

Wie in Fig. 3 gezeigt sind die Walzen 4 von der Kurveninnenseite aus so nach unten geneigt, daß die Flächen an den Enden der Walzen, auf denen Produkt aufliegen kann, gleiche Höhe haben. Die Wölbung 24 in der Oberfläche ist dabei so ausgebildet, daß das Profil spiegelsymmetrisch zu einer Ebene senkrecht zum Kurvenförderer ist, wodurch das Produkt waagerecht und ohne asymmetrische Auflagekräfte geführt werden kann.
Die Walzen sind, wie in Fig. 1 und 3 gezeigt, zwischen zwei im wesentlichen kreisbogenförmigen Wänden 26 und 28 angeordnet. Die kurveninnere Wand 26 weist zur Lagerung der Achse 14 Bohrungen 30 und die kurvenäußere Wand eine Zahnung mit zum Rand offenen Schlitzen 31 auf, deren unteres Ende unterhalb der Bohrungen 30 liegt. Dadurch ist die Walze insgesamt von der Kurveninnenseite aus nach unten geneigt gelagert. Die Achse 14 hat am kurvenäußeren Ende, in den Figuren nicht sichtbar, einen quadratischen Querschnitt, so daß sie in dem Schlitz 31 verdrehsicher gelagert ist. Die Zahnung ist durch ein als Abdeckung dienendes, aufgestecktes Kantenschutzprofil 32 aus einem zähen, elastischen Material abgedeckt. Dieses liegt nicht nur auf der Kante der Wand 28, sondern auch auf der Achse 14 auf und verhindert so eine Bewegung der Achse 14 in dem Schlitz 31 nach oben.

Die Zwischenräume zwischen den Walzen sind durch eine als Förderfläche dienende Abdeckplatte 33 abgedeckt, in der Öffnungen vorgesehen sind, durch die die Walzen 4 mit ihrer als Auflage dienenden Oberfläche greifen. Die Oberfläche der Abdeckplatte liegt dabei tiefer als der tiefste Bereich der Wölbung 24. Die Abdeckplatte 33 wird zum Teil von dem Kantenschutzprofil 32 getragen, das aufgrund seines Materials schwingungsdämpfend wirkt. Andererseits wird das Kantenschutzprofil 32 durch die Abdeckplatte 33 auch gegen Abgleiten nach oben gesichert.

Durch das Zusammenspiel von Bohrung 30, Schlitzen 31, Kantenschutzprofil 32 und Abdeckplatte 33 wird ein sehr einfacher Austausch von Walzen möglich, da nach Abnehmen der Abdeckplatte 33 und des Kantenschutzprofils 32 die Walze 4 mit ihrer Achse 14 nur aus dem Schlitz 31 nach oben gekippt und dann aus der Bohrung gezogen werden muß. Nach Einsetzen einer anderen Walze durch Einführen der Achse in die Bohrung 30 und Abkippen in den Schlitz 31 braucht nur das Kantenschutzprofil 32 aufgesteckt und danach die Abdeckplatte 33 wieder aufgesetzt zu werden.

Die jeweils gleich ausgelegten linearen Förderstrecken 6 und 8 weisen jeweils drei angetriebene, parallel verlaufende Bänder 34 bzw. 36 auf, die jeweils über auf Antriebswellen 38 und 40 befestigte Walzen (nicht gezeigt) laufen. Die Antriebswelle 38 und damit die Bänder der Förderstrecke 6 sind über einen Elektromotor 42 angetrieben. Die Antriebswelle 40 und damit die Bänder der Förderstrecke 8 sind dagegen indirekt von der Antriebswelle 38 angetrieben. Dazu sind mit den Antriebswellen 38 und 40 jeweils Kardangelenkwellen 44 bzw. 46 verbunden, deren Bewegung durch einen Zahnriemenantrieb mit auf den Enden der Kardangelenkwellen sitzenden Zahnscheiben 48 und 50 sowie einem Zahnriemen 52 gekoppelt ist, so daß die von dem Motor 42 angetriebenen Antriebswelle 38 über die Kardangelenkwelle 44, den Zahnriemen 52 und die Kardangelenkwelle 46 die Antriebswelle 40 der Förderstrecke 8 antreibt.

Die zahnscheibenseitigen Enden 54 bzw. 56 der Kardangelenkwellen sind dabei in einer einzigen Ebene angeordnet, die geneigt zu der durch die förderstreckenseitigen Enden 58 bzw. 59 der Kardangelenkwellen definierten Ebene verläuft, wodurch ein runder Lauf gewährleistet ist.

Bei der beschriebenen Ausführungsform ist jede der Walzen 4 angetrieben. Der Kurvenförderer ist so betrieben, daß in Fig. 1 das Produkt von rechts in den Förderer gelangt. Dazu sind die Walzen in zwei Gruppen gemeinsam angetriebener, benachbarter Walzen aufgeteilt, wobei die erste Gruppe die Walzen zwischen Walze 10 und Walze 60, die zweite Gruppe die Walzen zwischen Walze 12 und Walze 62 umfaßt. Dabei ist von der in Förderrichtung ersten Gruppe nur die in Förderrichtung erste Walze 10 und von der anderen Gruppe die in Förderrichtung letzte Walze 12 jeweils über einen Riemenantrieb 64 bzw. 66 mit Rundriemen über die Antriebswelle der linearen Förderstrecke 6 bzw. 8 als Antriebseinrichtung angetrieben. Jeweils ausgehend von diesen Walzen 10 bzw. 12 wird eine Walze, zum Beispiel 68 bzw. 70, von einer benachbarten Walze derselben Gruppe durch einen Riemenantrieb angetrieben. Für den Riemenantrieb werden hierzu Rundriemen 72 verwendet, die, wie in Fig. 3 gezeigt, in entsprechenden Rillenpaaren 74 des Walzengrundkörpers 16 laufen. Auch die Antriebswellen 38 und 40 der linearen Förderstrecke weisen Rillenpaare auf. In dem Walzengrundkörper 16 ist ein weiteres Rillenpaar 76 vorgesehen, so daß auf einem Walzengrundkörper je ein Rillenpaar zum Antrieb der Walze und eines zum Abtrieb zur nächsten Walze vorgesehen ist.

Durch diese Art des Antriebs wird eine sehr gute, aber einfache Synchronisation der Geschwindigkeit der Bänder 34 und 36 mit den benachbarten Walzen 10 bzw. 12 und damit ein störungsfreier Übergang zwischen den linearen Förderstrecken 6 und 8 und der Walzenstrecke sichergestellt.

### Bezugszeichenliste

- 4: Walze
- 6: lineare Förderstrecke
- 8: lineare Förderstrecke
- 10: Walze am Eingang der Walzenstrecke
- 12: Walze am Ausgang der Walzenstrecke
- 14: Achse für Walze
- 16: Walzengrundkörper
- 18: Mantel
- 20: Lager
- 22: Lager
- 24: Wölbung
- 26: Wand
- 28: Wand
- 30: Bohrung
- 31: Schlitz
- 32: Kantenschutzprofil
- 33: Abdeckplatte
- 34: Band
- 36: Band
- 38: Welle
- 40: Welle
- 42: Motor
- 44: Kardangelenkwelle
- 46: Kardangelenkwelle
- 48: Zahnscheibe
- 50: Zahnscheibe
- 52: Zahnriemen
- 54: zahnscheibenseitiges Ende
- 56: zahnscheibenseitiges Ende
- 58: förderstreckenseitiges Ende
- 59: förderstreckenseitiges Ende
- 60: Walze
- 62: Walze
- 64: Riemenantrieb
- 66: Riemenantrieb
- 68: Walze
- 70: Walze
- 72: Rundriemen
- 74: Rillenpaar
- 76: Rillenpaar

## Patentansprüche

1. Kurvenförderer, insbesondere für in einem Schuppenstrom angeordnete Druckprodukte, mit
benachbart auf einem Kreisbogen, auf einen gemeinsamen Mittelpunkt weisend angeordneten Walzen (4, 10, 12, 60, 62), von denen mindestens eine (10, 12) angetrieben ist,
wobei der Radius der Walzen am kurveninneren Ende der Walzen kleiner ist als am kurvenäußeren Ende und das einhüllende Längsprofil der Walzenoberfläche konkav gewölbt ist.

2. Kurvenförderer nach Anspruch 1,
**dadurch gekennzeichnet,**
**daß** die Walzen (4, 10, 12, 60, 62) von der kurveninneren Seite aus nach unten geneigt sind.

3. Kurvenförderer nach Anspruch 1 oder 2,
**dadurch gekennzeichnet,**
**daß** mindestens eine der Walzen (4, 10, 12, 60, 62) mindestens zwei durch einen Spalt getrennte Walzensegmente aufweist.

4. Kurvenförderer ach einem der vorhergehenden Ansprüche,
**dadurch gekennzeichnet,**
**daß** keine Andruckrollen vorgesehen sind, die den Schuppenstrom von oben fixieren.

5. Kurvenföderer nach einem der vorhergehenden Ansprüche,
**dadurch gekennzeichnet,**
**daß** im Bereich der Walzen kein Förderband vorgesehen ist.

6. Kurvenförderer einem der vorhergehenden Ansprüche,
**dadurch gekennzeichnet,**
**daß** alle Walzen (4, 10, 12, 60, 62) angetrieben sind.

7. Kurvenförderer nach einem der vorhergehenden Ansprüche,
**dadurch gekennzeichnet,**
**daß** die angetriebene Walze (4, 10, 12, 60, 62) bzw. mindestens eine der angetriebenen Walzen (4, 10, 12, 60, 62) mittels eines Riemenantriebs ( 64, 66) angetrieben ist.

8. Kurvenförderer nach einem der vorhergehenden Ansprüche,
**dadurch gekennzeichnet,**
**daß** der Kurvenförderer zwei Gruppen benachbarter Walzen (10, 60; 12, 62) aufweist, wobei von der in Förderrichtung ersten Gruppe eine in Förderrichtung erste Walze (10) und von der anderen Gruppe eine in Förderrichtung letzte Walze (12) von einer Antriebseinrichtung (46, 42, 54; 48, 44, 56) angetrieben ist, wobei jeweils ausgehend von diesen Walzen (10, 12) eine nachfolgende Walze (68, 70) von einer vorhergehenden Walze (10, 12) derselben Gruppe angetrieben ist.

9. Kurvenförderer nach Anspruch 8,
**dadurch gekennzeichnet,**
**daß** zwei Antriebseinrichtungen (46, 42, 54; 48, 44, 56) für die erste und letzte Walze (10, 12) vorgesehen sind, deren Drehgeschwindigkeiten synchronisiert sind.

10. Kurvenförderer nach einem der vorhergehenden Ansprüche,
**dadurch gekennzeichnet,**
**daß** die Walzen (4, 10, 12, 60, 62) auf Achsen (14) gelagert sind, und
**daß** zwei im wesentlichen kreisbogenförmige Wände (26, 28) vorgesehen sind, zwischen denen die Walzen angeordnet sind, wobei eine Wand (26) Bohrungen (30) zur Aufnahme der Achsen und die andere Wand (28) eine nach oben weisende Zahnung (31) aufweist, die so ausgebildet ist, daß in sie die Enden der Walzenachsen einlegbar sind.

11. Kurvenförderer nach Anspruch 10,
**dadurch gekennzeichnet,**
**daß** die Achsen (14) und die Bohrungen (30) oder die Zahnung so ausgebildet sind, daß die Achsen verdrehsicher gehalten sind.

12. Kurvenförderer nach einem der vorhergehenden Ansprüche,
**dadurch gekennzeichnet,**
**daß** vor und/oder nach der von den Walzen (4, 10, 12, 60, 62) gebildeten Förderstrecke eine lineare Förderstrecke (6, 8) angeordnet ist.

13. Kurvenförderer nach Anspruch 12,
**dadurch gekennzeichnet,**
**daß** der Winkel zwischen der in Förderrichtung ersten und letzten Walzenachse (10, 12) kleiner ist als der Förderwinkel des Kurvenförderers.

14. Kurvenförderer nach einem der Ansprüche 12 bis 14,
**dadurch gekennzeichnet,**
**daß** die lineare Förderstrecke (6, 8) mindestens ein angetriebenes Band ( 34, 36) aufweist.

15. Kurvenförderer nach einem der Ansprüche 12 bis 14,
**dadurch gekennzeichnet,**
**daß** der Kurvenförderer zwei lineare, angetriebene Förderstrecken (26, 28) aufweist und die Antriebe (46, 48) der beiden linearen Förderstrecken gekoppelt sind.

16. Kurvenförderer nach einem der Ansprüche 12 bis 15,
**dadurch gekennzeichnet,**
**daß** zwei lineare Förderstrecken (6,8) mit angetriebenen Bändern (34, 36) vorgesehen sind, wobei die Förderstrecken (6,8) jeweils Antriebswellen (38, 40) zum Antrieb mindestens eines der Bänder der jeweiligen Förderstrecke aufweisen, die Antriebswelle (38) der einen Förderstrecke von einem Motor (42) angetrieben ist und wobei die Antriebswelle der anderen Förderstrecke von der Antriebswelle der einen Förderstrecke über eine erste Kardanwelle (44), einen von der ersten Kardanwelle angetriebenen Zahnriemenantrieb (48, 50, 52) und eine von dem Zahnriemenantrieb angetriebenen zweite Kardanwelle (46) angetrieben ist.

17. Kurvenförderer nach Anspruch 16,
**dadurch gekennzeichnet,**
**daß** die Enden (54, 56) der Kardangelenkwellen, die mit dem Zahnriemenantrieb verbunden sind, in einer einzigen Ebene angeordnet sind, die geneigt zu der durch die förderstreckenseitigen Enden (58, 59) der Kardangelenkwellen definierten Ebene verläuft.

18. Kurvenförderer nach Anspruch 8 und einem der Ansprüche 15 bis 17,
**dadurch gekennzeichnet,**
**daß** an beiden Enden des Kurvenförderers lineare Förderstrecken (6, 8) angeordnet sind, und die Walzen (4, 10, 12, 60, 62) an den Enden der von ihnen gebildeten Walzenstrecke über ein Element (38, 40) der jeweiligen linearen Förderstrecke angetrieben sind.

19. Kurvenförderer nach einem der vorhergehenden Ansprüche,
**gekennzeichnet**
**durch** eine Abdeckplatte (33) mit einer oder mehreren Öffnungen für die Walzen (4, 10, 12, 60, 62).
